(19) Europäisches Patentamt / European Patent Office / Office européen des brevets

(11) **EP 4 663 413 A1**

(12) **EUROPEAN PATENT APPLICATION**
published in accordance with Art. 153(4) EPC

(43) Date of publication:
**17.12.2025 Bulletin 2025/51**

(21) Application number: **23921381.2**

(22) Date of filing: **22.12.2023**

(51) International Patent Classification (IPC):
**B41J 2/01** (2006.01)   **B41J 2/21** (2006.01)
**B41M 5/00** (2006.01)   **C09D 11/30** (2014.01)

(52) Cooperative Patent Classification (CPC):
**B41J 2/01; B41J 2/21; B41M 5/00; C09D 11/30**

(86) International application number:
**PCT/JP2023/046235**

(87) International publication number:
**WO 2024/166563 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.02.2023 JP 2023019432**

(71) Applicant: FUJIFILM Corporation
Tokyo 106-8620 (JP)

(72) Inventors:
• IKOSHI, Masao
  Ashigarakami-gun, Kanagawa 258-8577 (JP)
• TAMAGAWA, Kiyomi
  Ashigarakami-gun, Kanagawa 258-8577 (JP)

(74) Representative: **Klunker IP
Patentanwälte PartG mbB
Destouchesstraße 68
80796 München (DE)**

(54) **IMAGE RECORDING METHOD**

(57)     An image recording method includes: a step of jetting ink containing water and a colorant onto a substrate as at least two types of liquid droplets having liquid droplet sizes different from each other by a single-pass method using an ink jet recording method, and the $V_1$, the $V_2$, the $a_1$, the $a_2$, and the $\theta$, which are parameters related to the first liquid droplet and the second liquid droplet, satisfy Expression (1) and Expression (2). $0.45 \leq V_2/V_1 \leq 0.9$ ... (1) $3.5 \leq \{V_1^{1/3} \times (1 + \cos\theta)\}^2 \times a_1 + \{V_2^{1/3} \times (1 + \cos\theta)\}^2 \times a_2 \leq 7.0$ ... (2)

## FIG. 1

EP 4 663 413 A1

**EP 4 663 413 A1**

**Description**

**BACKGROUND OF THE INVENTION**

1. Field of the Invention

The present disclosure relates to an image recording method.

2. Description of the Related Art

In the related art, various studies have been conducted on an image recording method.

For example, JP2010-075786A discloses a pattern forming method of sequentially jetting liquid droplets containing a functional component in one direction onto a surface of a substrate from an ink jet recording head including a nozzle that jets the liquid droplets onto the surface of the substrate to form a linear pattern, in which, in a case where a diameter of the liquid droplet before landing on the surface of the substrate is denoted as d and a contact angle of the liquid droplet with respect to the substrate is denoted as $\theta$, the ink jet recording head is controlled such that a dot pitch p of the liquid droplets adjacent to each other on the surface of the substrate satisfies a specific condition, and a proportion of a volume of a volatile solvent contained in the liquid droplet is set to a specific proportion.

JP2009-233612A discloses a drawing method of jetting three or more liquid droplets by inkjet to draw a pattern extending in a predetermined direction on a recording medium, in which the plurality of liquid droplets are divided into a plurality of groups each composed of one droplet or two or more droplets, including at least one group composed of two or more adjacent droplets, each droplet of the group composed of two or more droplets is landed on the recording medium so as to overlap with an adjacent droplet in the same group, end droplets of each group are landed on the recording material with a gap from end droplets of adjacent other groups, and are merged with the end droplets of the other groups by spreading on the recording material.

JP2016-112892A discloses an image processing apparatus for recording an image on a recording medium by recording a first ink in accordance with first quantized data and recording a second ink in accordance with second quantized data, the image processing apparatus comprising: a first quantization unit that generates the first quantized data by quantizing multivalued data indicating an intermediate density corresponding to the first ink; and a second quantization unit that generates the second quantized data by quantizing multivalued data indicating an intermediate density corresponding to the second ink, in which a surface tension of the first ink is higher than a surface tension of the second ink, and a first dot pattern recorded on the recording medium in accordance with the first quantized data has higher dispersibility than a second dot pattern recorded on the recording medium in accordance with the second quantized data.

**SUMMARY OF THE INVENTION**

However, it is difficult to achieve good drying properties and while suppressing streaks in an image to be recorded.

The present disclosure has been made in view of such circumstances, and an object of one embodiment of the present disclosure is to provide an image recording method that is excellent in drying properties and capable of suppressing streaks in an image to be recorded.

The present disclosure includes the following aspects.

<1> An image recording method comprising:

a step of jetting ink containing water and a colorant onto a substrate as at least two types of liquid droplets having liquid droplet sizes different from each other by a single-pass method using an ink jet recording method, in which, in a case where two types of liquid droplets of the at least two types of liquid droplets are defined as a first liquid droplet and a second liquid droplet, a size of the first liquid droplet is defined as $V_1$ in units of pL, a size of the second liquid droplet is defined as $V_2$ in units of pL, a ratio of a number of times of jetting of the first liquid droplet to a total number of times of jetting of the first liquid droplet and the second liquid droplet is defined as $a_1$, a ratio of a number of times of jetting of the second liquid droplet to the total number of times of jetting of the first liquid droplet and the second liquid droplet is defined as $a_2$, and a contact angle of the ink with respect to a contact surface with which the ink comes into contact by the jetting of the ink is defined as $\theta°$, the $V_1$, the $V_2$, the $a_1$, the $a_2$, and the $\theta$ satisfy Expression (1) and Expression (2).

$$0.45 \le V_2/V_1 \le 0.9 \ldots (1)$$

$$3.5 \le \{V_1^{1/3} \times (1 + \cos\theta)\}^2 \times a_1 + \{V_2^{1/3} \times (1 + \cos\theta)\}^2 \times a_2 \le 7.0 \ldots (2)$$

Here, the contact angle is measured, after applying the ink to the contact surface, at a point in time when 300 milliseconds have elapsed from a point in time when the ink is applied to the contact surface.

<2> The image recording method according to <1>, in which the $V_1$ and the $V_2$ satisfy Expression (1A).

$$0.5 \le V_2/V_1 \le 0.8 \ldots (1A)$$

<3> The image recording method according to <1> or <2>,
in which the $V_1$, the $V_2$, the $a_1$, the $a_2$, and the $\theta$ satisfy Expression (2A).

$$4.5 \le \{V_1^{1/3} \times (1 + \cos\theta)\}^2 \times a_1 + \{V_2^{1/3} \times (1 + \cos\theta)\}^2 \times a_2 \le 6.2 \ldots (2A)$$

<4> The image recording method according to any one of <1> to <3>,
in which the $V_1$, the $V_2$, the $a_1$, the $a_2$, and the $\theta$ satisfy Expression (3).

$$[\{V_1^{1/3} \times (1 + \cos\theta)\}^2 - \{V_2^{1/3} \times (1 + \cos\theta)\}^2] \times a_1 \le 4.8 \ldots (3)$$

<5> The image recording method according to any one of <1> to <4>,
in which the substrate is a non-permeable substrate.
<6> The image recording method according to any one of <1> to <5>,
in which the colorant is a white coloring material.
<7> The image recording method according to <6>,
in which the white coloring material includes at least one selected from the group consisting of titanium dioxide and hollow particles.
<8> The image recording method according to any one of <1> to <7>, further comprising:

a step of applying a pretreatment liquid containing a coagulating agent onto the substrate,
in which, in the step of jetting the ink, the ink is jetted onto the substrate onto which the pretreatment liquid has been applied.

According to one embodiment of the present disclosure, it is possible to provide an image recording method in which drying properties are excellent, and streaks of the image to be recorded can be suppressed.

**BRIEF DESCRIPTION OF THE DRAWINGS**

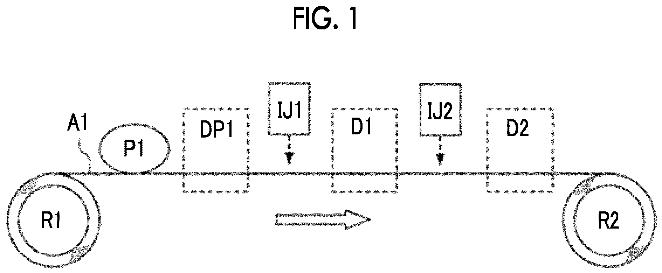

Fig. 1 is a diagram conceptually showing an example of an image recording apparatus used for performing an image recording method according to the present disclosure.

**DESCRIPTION OF THE PREFERRED EMBODIMENTS**

In the present disclosure, the numerical ranges shown using "to" means ranges including the numerical values described before and after "to" as the minimum value and the maximum value.
In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.
In the present disclosure, in a case in which a plurality of substances corresponding to respective components in a composition are present, the amount of the respective components in the composition means the total amount of the plurality of substances present in the composition unless otherwise specified.
In the present disclosure, a combination of two or more preferred aspects is a more preferred aspect.

In the present disclosure, the meaning of the term "step" includes not only an independent step but also a step whose intended purpose is achieved even in a case in which the step is not clearly distinguished from other steps.

In the present disclosure, the term "image" means an ink film itself in a case where one type of ink is used, and means a laminated film of a plurality of ink films in a case where a plurality of inks are used in an overlapping manner.

In the present disclosure, "image recording" means formation of the image.

The concept of "image" in the present disclosure also includes a solid image.

[Image Recording Method]

An image recording method according to the present disclosure comprises: a step of jetting ink containing water and a colorant onto a substrate as at least two types of liquid droplets having liquid droplet sizes different from each other by a single-pass method using an ink jet recording method (hereinafter, referred to as "ink jetting step"), in a case where two types of liquid droplets of the at least two types of liquid droplets are defined as a first liquid droplet and a second liquid droplet, a size of the first liquid droplet is defined as $V_1$ (pL), a size of the second liquid droplet is defined as $V_2$ (pL), a ratio of a number of times of jetting of the first liquid droplet to a total number of times of jetting of the first liquid droplet and the second liquid droplet is defined as $a_1$, a ratio of a number of times of jetting of the second liquid droplet to the total number of times of jetting of the first liquid droplet and the second liquid droplet is defined as $a_2$, and a contact angle of the ink with respect to a contact surface with which the ink comes into contact by the jetting of the ink is defined as $\theta°$, the $V_1$, the $V_2$, the $a_1$, the $a_2$, and the $\theta$ satisfy Expression (1) and Expression (2). Here, the contact angle is measured, after applying the ink to the contact surface, at a point in time when 300 milliseconds have elapsed from a point in time when the ink is applied to the contact surface.

The image recording method of the present disclosure may include other steps in addition to the ink jetting step, as necessary.

According to the image recording method of the present disclosure, drying properties are excellent, and streaks of the image to be recorded can be suppressed.

Such an effect is exhibited in the ink jetting step in a case where the parameters related to the first liquid droplet and the second liquid droplet, which are two types of liquid droplets among the at least two types of liquid droplets, satisfy Expression (1) and Expression (2).

In the related art, in the image recording method using an ink jet recording device, paper selection can be performed in the ink jet recording device, and halftone processing suitable for the selected paper is performed. However, the spread of the ink film formed by the jetting of the ink onto the substrate has not been focused on.

The present inventors have focused on the sizes of the first liquid droplets and the second liquid droplets, the number of times of jetting of the first liquid droplets and the second liquid droplets, and the contact angle of the ink with respect to the contact surface with which the ink comes into contact, and have found that in a case where these parameters satisfy Expression (1) and Expression (2), the drying properties are excellent and the streaks of the image can be suppressed.

Hereinafter, the image recording method according to the embodiment of the present disclosure will be described in more detail.

[Ink Applying Step]

In the image recording method of the present disclosure, an ink containing water and a colorant is jetted onto a substrate by a single-pass method using an ink jet recording method as at least two types of liquid droplets having different liquid droplet sizes.

In the present disclosure, the "liquid droplet" means one droplet of ink jetted from an ink jet head.

<Expression (1) and Expression (1A)>

In the image recording method of the present disclosure, the ink is jetted as at least two types of liquid droplets having liquid droplet sizes different from each other. Two types of liquid droplets among at least two types of liquid droplets are defined as a first liquid droplet and a second liquid droplet. The size of the first liquid droplet is larger than the size of the second liquid droplet.

A method of measuring the size (that is, the volume) of the liquid droplet is not particularly limited, and examples thereof include a weight method and a camera imaging method.

The weight method is performed, for example, by the following method.

The ink is jetted into a container for measurement a predetermined number of times of jetting. The total mass of the liquid droplets jetted into the container for measurement is measured. The size of the liquid droplet is calculated based on the following expression.

Size (pL) of liquid droplet = (Total mass (g) of jetted liquid droplets ÷ Number of times of jetting) ÷ Specific gravity (g/cm$^3$) of ink × 10$^9$

The camera imaging method is performed by, for example, the following method.

An inkjet droplet flight observation device (product name: "jetXpert", manufactured by ImageXpert) is installed on the ink jet head. The size of the liquid droplet is calculated by imaging the liquid droplet.

$V_1$ and $V_2$ satisfy Expression (1).

$$0.45 \leq V_2/V_1 \leq 0.9 \ldots (1)$$

In Expression (1),

$V_1$ is the size of the first liquid droplet. The unit is "pL".

$V_2$ is the size of the second liquid droplet. The unit is "pL".

In a case where "$V_2/V_1$" is 0.45 to 0.9, the degree of overlap between dots formed by the jetting of the ink can be reduced, and the drying properties of the ink are excellent.

From the viewpoint of further improving the drying properties, it is preferable that $V_1$ and $V_2$ satisfy Expression (1A) or (1B).

$$0.5 \leq V_2/V_1 \leq 0.8 \ldots (1A)$$

$$0.55 \leq V_2/V_1 \leq 0.7 \ldots (1B)$$

<Expression (2) and Expression (2A)>

$V_1$, $V_2$, $a_1$, $a_2$, and $\theta$ satisfy Expression (2).

$$3.5 \leq \{V_1^{1/3} \times (1 + \cos\theta)\}^2 \times a_1 + \{V_2^{1/3} \times (1 + \cos\theta)\}^2 \times a_2 \leq 7.0 \ldots (2)$$

In Expression (2),

$V_1$ is the size of the first liquid droplet.

$V_2$ is the size of the second liquid droplet.

$a_1$ is a ratio of the number of times of the first liquid droplets are jetted to the total number of times of the first liquid droplets and the second liquid droplets are jetted.

$a_2$ is a ratio of the number of times of the second liquid droplets are jetted to the total number of times of the first liquid droplets and the second liquid droplets are jetted.

$\theta$ is a contact angle of the ink with respect to a contact surface with which the ink comes into contact due to the jetting of the ink. The unit is "°".

"$\{V_1^{1/3} \times (1 + \cos\theta)\}^2 \times a_1 + \{V_2^{1/3} \times (1 + \cos\theta)\}^2 \times a_2$" is a parameter related to the degree of overlap of dots on the substrate (hereinafter, also referred to as "dot overlap parameter").

In a case where the dot overlap parameter is 3.5 or more, dots formed by the jetting of the ink are appropriately disposed on the substrate, and streaks of the image are suppressed.

In a case where the dot overlap parameter is 7.0 or less, the degree of overlap between dots formed by the jetting of the ink can be reduced, and the drying properties of the ink are excellent.

From the viewpoint of further improving the drying properties and further suppressing streaks in the image, it is preferable that $V_1$, $V_2$, $a_1$, $a_2$, and $\theta$ satisfy Expression (2A) or (2B).

$$4.5 \leq \{V_1^{1/3} \times (1 + \cos\theta)\}^2 \times a_1 + \{V_2^{1/3} \times (1 + \cos\theta)\}^2 \times a_2 \leq 6.2 \ldots (2A)$$

$$5.0 \leq \{V_1^{1/3} \times (1 + \cos\theta)\}^2 \times a_1 + \{V_2^{1/3} \times (1 + \cos\theta)\}^2 \times a_2 \leq 6.0 \ldots (2B)$$

<Expression (3)>

It is preferable that $V_1$, $V_2$, $a_1$, $a_2$, and $\theta$ satisfy Expression (3).

$$[\{V_1^{1/3} \times (1 + \cos\theta)\}^2 - \{V_2^{1/3} \times (1 + \cos\theta)\}^2] \times a_1 \leq 4.8 \ldots (3)$$

"$[\{V_1^{1/3} \times (1 + \cos\theta)\}^2 - \{V_2^{1/3} \times (1 + \cos\theta)\}^2] \times a_1$" is a parameter related to the sharpness of the image (hereinafter, also referred to as an "image sharpness parameter").

In a case where the image sharpness parameter is 4.8 or less, the cockling of the boundary line between the portion where the image is recorded and the portion where the image is not recorded is reduced, and the sharpness of the image is improved.

From the viewpoint of further improving the sharpness of the image, the image sharpness parameter is more preferably 4.0 or less and still more preferably 2.4 or less. The lower limit value of the image sharpness parameter is not particularly limited, and is, for example, 0.

[$V_1$, $V_2$]

The size $V_1$ of the first liquid droplet and the size $V_2$ of the second liquid droplet are not particularly limited as long as Expression (1) and Expression (2) can be satisfied.

From the viewpoint of suppressing streaks in the image, $V_1$ is preferably 2.5 pL to 5.0 pL and more preferably 3.0 pL to 4.5 pL.

$V_2$ is smaller than $V_1$, and from the viewpoint of jetting reliability, $V_2$ is preferably 1.5 pL or more and more preferably 1.8 pL or more.

In the image recording method of the present disclosure, liquid droplets having a size different from the first liquid droplets and the second liquid droplets may be jetted in addition to the first liquid droplets and the second liquid droplets. The liquid droplet having a size different from the first liquid droplet and the second liquid droplet may be larger than the first liquid droplet and smaller than the second liquid droplet, or may be smaller than the first liquid droplet and larger than the second liquid droplet.

From the viewpoint of further improving the drying properties and further suppressing streaks of the image, it is preferable that the ink is jetted only with two types of liquid droplets (first liquid droplet and second liquid droplet) having different liquid droplet sizes.

[$a_1$, $a_2$]

The ratio $a_1$ of the number of times of jetting of the first liquid droplets and the ratio $a_2$ of the number of times of jetting of the second liquid droplets are not particularly limited as long as Expression (2) can be satisfied.

$a_1$ is preferably 0.05 to 0.95 and more preferably 0.3 to 0.7.
$a_2$ is preferably 0.05 to 0.95 and more preferably 0.3 to 0.7.

The sum of the ratio of the number of times of jetting of the first liquid droplets and the ratio of the number of times of jetting of the second liquid droplets is 1.

[$\theta$]

The contact angle of the ink with respect to the contact surface with which the ink comes into contact due to the jetting of the ink is not particularly limited as long as Expression (2) can be satisfied.

From the viewpoint of further improving the drying properties and further suppressing streaks in the image, $\theta$ is preferably 20° to 70° and more preferably 30° to 65°.

The expression of "contact surface with which the ink comes into contact due to the jetting of the ink" means a surface with which the ink comes into contact due to the jetting of the ink onto the substrate. The contact surface may be dried so as not to come into contact with the ink and not to be mixed with other layers. For example, in a case where the ink is directly jetted onto the substrate, the contact surface is the surface of the substrate. In addition, in a case where the ink is jetted after the A layer is formed on the substrate, the contact surface is a surface of the A layer.

The contact angle is measured at a point in time 300 milliseconds after the ink is applied to the contact surface.

The expression of "point in time 300 milliseconds after the ink is applied to the contact surface" means a state after the shape of the ink is fixed by volatilization of volatile components such as water and an organic solvent contained in the ink to some extent.

In the measurement of the contact angle, the means for applying the ink to the contact surface is not particularly limited.

In the present disclosure, the contact angle is measured by the following method.

The contact angle is measured using a contact angle meter, for example, at 20°C and a liquid droplet amount of 2.0 µL using a contact angle meter (product name "DM-501", manufactured by Kyowa Interface Science Co., Ltd.).

The contact angle of the ink with respect to the contact surface with which the ink comes into contact due to the jetting of the ink changes depending on the surface tension of the ink, the surface energy of the contact surface with which the ink comes into contact due to the jetting of the ink, and the like.

The surface tension of the ink changes depending on, for example, the content of the surfactant contained in the ink, the content of the organic solvent contained in the ink, and the like.

(Substrate)

The substrate is not particularly limited as long as an ink image can be formed thereon, and examples thereof include paper, cloth, wood, metals, and plastics.

The substrate may be a permeable substrate or a non-permeable substrate.

In the image recording method of the present disclosure, particularly in a case where a non-permeable substrate is used as the substrate, the drying properties and the effect of suppressing streaks in the image are high. Therefore, the substrate is preferably a non-permeable substrate.

In the present disclosure, impermeability of the non-permeable substrate denotes a property that a water absorption rate in 24 hours, which is measured in conformity with ASTM D570-98 (2018), is 2.5% or less. Here, the unit "%" of the water absorption rate is on a mass basis. The above-described water absorption rate is preferably 1.0% or less and more preferably 0.5% or less.

Examples of the material of the non-permeable substrate include glass, a metal (such as aluminum, zinc, or copper), and a resin (such as polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, nylon, or an acrylic resin).

It is preferable that the material of the non-permeable substrate is a resin. That is, it is preferable that the non-permeable substrate is a resin substrate.

Among these, from the viewpoint of general-purpose properties, the material of the non-permeable substrate is preferably polypropylene, polyethylene, polyethylene terephthalate, nylon, an acrylic resin, or polyvinyl chloride.

As a shape of the non-permeable substrate, a sheet-like (film-like) or a plate-like non-permeable substrate is preferable. Examples of the non-permeable substrate having such a shape include a glass plate, a metal plate, a resin sheet (resin film), paper on which plastic is laminated, paper on which a metal is laminated or vapor-deposited, and a plastic sheet (plastic film) on which a metal is laminated or vapor-deposited.

Examples of the non-permeable substrate made of a resin include a resin sheet (resin film), and more specific examples thereof include a flexible packaging material for packaging food or the like, and a panel for guiding the floor of a mass retailer.

Examples of the non-permeable substrate also include a textile (woven fabric) or nonwoven fabric formed of non-permeable fibers, in addition to the sheet-like (film-like) or plate-like non-permeable substrate.

The non-permeable substrate may be subjected to a hydrophilization treatment. Examples of the hydrophilization treatment include a corona treatment, a plasma treatment, a flame treatment, a heat treatment, an abrasion treatment, a light irradiation treatment (such as a UV treatment), and a flame treatment, but the hydrophilization treatment is not limited thereto. The corona treatment can be performed, for example, using CORONA MASTER (product name "PS-10S", manufactured by Shinko Electric & Instrumentation Co., Ltd.). The conditions for the corona treatment may be appropriately selected according to the kind of the non-permeable substrate and the like.

The non-permeable substrate may be a non-permeable substrate having transparency.

Here, the expression of "having transparency" denotes that a transmittance in visible light having a wavelength of 400 nm to 700 nm is 80% or more (preferably 90% or more).

In a case where the non-permeable substrate is a non-permeable substrate having transparency, the image is easily visually recognized through the non-permeable substrate from an image non-recorded surface side of the non-permeable substrate.

For example, with the non-permeable substrate having transparency, in a case where a pretreatment liquid described later, a non-white ink described later, and a white ink described later are applied onto the non-permeable substrate in this order to record an image, a non-white image (for example, a pattern image such as a character and a figure) with a white image (for example, a solid image) as a background is easily visually recognized through the non-permeable substrate from the image non-recorded surface side of the non-permeable substrate.

(Ink)

In the image recording method of the present disclosure, the ink contains water and a colorant.

-Water-

The ink contains water.
A content of the water is preferably 10% by mass or more, more preferably 20% by mass or more, still more preferably 30% by mass or more, and particularly preferably 50% by mass or more with respect to the total amount of the ink.
The upper limit of the content of the water is appropriately determined according to contents of other components, and is, for example, 99% by mass, preferably 95% by mass, and more preferably 90% by mass with respect to the total amount of the ink.

-Colorant-

The ink contains a colorant.
In the present disclosure, the colorant means a substance which can be used for making the ink a chromatic ink or an achromatic ink, in a case of being contained in the ink.
Examples of the colorant include a dye and a pigment. Among these, from the viewpoint of durability, the colorant is preferably a pigment.
A commercially available organic pigment or inorganic pigment may be used as the pigment.
Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.
In addition, the pigment may be a water-insoluble pigment which can be dispersed in water by a dispersing agent, or may be a self-dispersing pigment.
The self-dispersing pigment is a pigment that can be dispersed in water without using a dispersing agent.
The self-dispersing pigment is, for example, a compound in which at least one selected from the group consisting of a hydrophilic group such as a carbonyl group, a hydroxyl group, a carboxyl group, a sulfo group, and a phosphoric acid group and salts thereof is chemically bonded to a surface of the pigment directly or through another group.
The colorant may be a chromatic (for example, cyan, magenta, yellow, and the like) coloring material or an achromatic (for example, white and black) coloring material.
Among these, the colorant is preferably a white coloring material. A white image recorded using a white ink containing a white coloring material can be used as a background of a non-white image (for example, a pattern image such as a character or a figure).
Examples of the white coloring material include white pigments such as titanium dioxide, barium sulfate, calcium carbonate, silica, zinc oxide, zinc sulfide, mica, talc, and pearl.
From the viewpoint of covering properties, an average primary particle diameter of the white pigment is preferably 150 nm or more, and more preferably 200 nm or more. In addition, from the viewpoint of jettability of the ink, the average primary particle diameter of the white pigment is preferably 400 nm or less, and more preferably 350 nm or less. The average primary particle diameter of the white pigment is preferably 150 nm to 400 nm.
In the present disclosure, the average primary particle diameter of the white pigment is a value measured using a transmission electron microscope (TEM). Specifically, the average primary particle diameter of the white pigment is a value determined by selecting 50 optional particles of the white pigment present in a visual field observed by the TEM, measuring primary particle diameters of the 50 particles, and averaging the measured diameters. As the transmission electron microscope, a transmission electron microscope 1200EX manufactured by JEOL Ltd. can be used.
The white coloring material may be hollow particles. The hollow particles are particles having a void inside. Due to the difference between the refractive index of the outer shell and the refractive index of the void of the hollow particles, in a case where the hollow particles are contained in the ink, an ink exhibiting white color is obtained.
Examples of the hollow particles include hollow resin particles and inorganic hollow particles.
Examples of the resin constituting the hollow resin particles include an acrylic resin, a styrene-acrylic resin, a crosslinked styrene-acrylic resin, a urethane resin, and a maleic acid-based copolymer.
Examples of the inorganic material constituting the inorganic hollow particles include silica, alumina, titania, and zinc oxide.
Among these, the white coloring material preferably includes at least one selected from the group consisting of titanium dioxide and hollow particles.
From the viewpoints of the image density and the jettability, the content of the colorant is preferably in a range of 2% by mass to 25% by mass, more preferably in a range of 5% by mass to 25% by mass, and still more preferably in a range of 10% by mass to 20% by mass with respect to the total amount of the ink.

-Resin-

It is preferable that the ink contains at least one resin.

The resin in the ink contributes to film forming properties of the ink (that is, formability of the ink film).

A weight-average molecular weight (Mw) of the resin is preferably 1,000 to 300,000, more preferably 2,000 to 200,000, and still more preferably 5,000 to 100,000.

In the present disclosure, the weight-average molecular weight (Mw) means a value measured according to gel permeation chromatography (GPC), unless otherwise specified.

For the measurement by gel permeation chromatography (GPC), HLC (registered trademark)-8020GPC (manufactured by Tosoh Corporation) is used as a measuring device, three columns of TSKgel (registered trademark) Super Multipore HZ-H (4.6 mm ID x 15 cm, manufactured by Tosoh Corporation) are used as a column, and tetrahydrofuran (THF) is used as an eluant. In addition, as the measurement conditions, a sample concentration of 0.45% by mass, a flow rate of 0.35 ml/min, a sample injection amount of 10 $\mu$l, and a measurement temperature of 40°C are set, and a RI detector is used.

The calibration curve is created from eight samples of "Standard sample TSK standard, polystyrene" manufactured by Tosoh Corporation: "F-40", "F-20", "F-4", "F-1", "A-5000", "A-2500", "A-1000", and "n-propylbenzene".

Examples of the resin include a pigment dispersing resin as a dispersing agent.

Examples of the resin also include resin particles.

The ink may contain at least one pigment dispersing resin.

The pigment dispersing resin is a resin having a function of dispersing a pigment.

The pigment dispersing resin may be a random copolymer or a block copolymer.

The pigment dispersing resin may have a crosslinking structure.

The ink may be prepared using a pigment dispersion liquid containing a pigment and a pigment dispersing resin.

As the pigment dispersing resin, for example, known polymer dispersing agents, such as polymer dispersing agents described in paragraphs 0029 to 0106 of WO2021/221069A, can be used.

In a case where the ink contains the pigment dispersing resin, a ratio of a content of the pigment and a content of the pigment dispersing resin in the ink is preferably 1:0.04 to 1:3, more preferably 1:0.05 to 1:1, and still more preferably 1:0.05 to 1:0.5 on a mass basis.

In a case where the ink contains the pigment dispersing resin, the content of the pigment dispersing resin is preferably 0.1% by mass to 10% by mass, more preferably 0.3% by mass to 5% by mass, and still more preferably 0.5% by mass to 2.5% by mass with respect to the total amount of the ink.

The ink may contain at least one kind of resin particles.

A resin constituting the resin particles is preferably a water-insoluble resin. The "water-insoluble" in the water-insoluble resin means a property that an amount dissolved in 100 g of distilled water at 25°C is less than 2 g.

A volume average particle diameter of the resin particles is preferably 1 nm to 300 nm, more preferably 3 nm to 200 nm, and still more preferably 5 nm to 150 nm.

In the present disclosure, the volume average particle diameter means a value measured using a laser diffraction/scattering type particle size distribution analyzer.

As the measuring device, a particle size distribution measuring device "MICROTRAC MT-3300II" (manufactured by Nikkiso Co., Ltd.) is exemplified.

It is preferable that the resin particles are at least one selected from the group consisting of acrylic resin particles, ester resin particles, a mixture of acrylic resin particles and ester resin particles, composite particles containing an acrylic resin and an ester resin, styrene-acrylic resin particles, and polyurethane resin particles.

In the present disclosure, the acrylic resin means a polymer (homopolymer or copolymer) of a raw monomer including at least one selected from the group consisting of acrylic acid, a derivative of acrylic acid (for example, acrylic acid ester and the like), methacrylic acid, and a derivative of methacrylic acid (for example, methacrylic acid ester and the like).

From the viewpoint of further improving rub resistance of the image, a glass transition temperature (Tg) of the resin particles is preferably 50°C to 250°C and more preferably 50°C to 150°C.

Here, a measurement Tg obtained by actual measurement is applied as the glass transition temperature (Tg) of the resin particles. A method for measuring the measurement Tg can refer to paragraph 0111 of JP2015-25076A.

For the resin particles, for example, descriptions described in paragraphs 0038 to 0114 of WO2021/192720A and paragraphs 0109 to 0120 of JP2015-25076A may be referred to.

In a case where the ink contains the resin particles, a content of the resin particles in the ink is preferably 1% by mass to 20% by mass, more preferably 2% by mass to 15% by mass, and still more preferably 2% by mass to 10% by mass with respect to the total amount of the ink.

-Water-Soluble Organic Solvent-

It is preferable that the ink contains at least one water-soluble organic solvent.

In this manner, jetting stability from the ink jet head is ensured.

The water-soluble organic solvent contained in the ink may be used alone or in combination of two or more kinds thereof.

In the present disclosure, "water-soluble" in the "water-soluble organic solvent" means a property of being dissolved in 1 g or more in 100 g of water at 25°C.

The type of the water-soluble organic solvent which can be contained in the ink is not particularly limited, and examples thereof include:

a monoalcohol having 1 to 4 carbon atoms;
a diol such as 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, or 4-methyl-1,2-pentanediol;
triols such as glycerin, 1,2,6-hexanetriol, and trimethylolpropane;
alkylene glycols such as ethylene glycol and propylene glycol;
alkylene glycol monoalkyl ethers such as ethylene glycol monoalkyl ether and propylene glycol monoalkyl ether;
polyalkylene glycol such as diethylene glycol, triethylene glycol, tetraethylene glycol, pentaethylene glycol, dipropylene glycol, or polyoxyethylene polyoxypropylene glycol;
polyalkylene glycol ether such as diethylene glycol monoalkyl ether, triethylene glycol monoalkyl ether, tripropylene glycol monoalkyl ether, or polyoxypropylene glyceryl ether;
2-pyrrolidone, and N-methyl-2-pyrrolidone;
and the like.

From the viewpoint of jetting stability, it is preferable that the water-soluble organic solvent in the ink includes at least one selected from the group consisting of alkylene glycol and alkylene glycol monoalkyl ether.

A content of the water-soluble organic solvent is preferably 10% by mass to 40% by mass and more preferably 15% by mass to 30% by mass with respect to the total amount of the ink.

-Additive-

The ink may contain an additive such as a surfactant, a water-soluble resin, a co-sensitizer, an ultraviolet absorbing agent, an antioxidant, a fading inhibitor, a conductive salt, and a basic compound, as necessary.

-Physical Properties-

From the viewpoint of improving the jetting stability, a pH (25°C) of the ink is preferably 7 to 10 and more preferably 7.5 to 9.5.

The pH of the ink is measured at 25°C using a pH meter, for example, a pH meter (product name "WM-50EG") manufactured by DKK-TOA CORPORATION.

A viscosity (25°C) of the ink is preferably 0.5 mPa·s to 30 mPa·s, more preferably 2 mPa·s to 20 mPa·s, preferably 2 mPa·s to 15 mPa·s, and still more preferably 3 mPa·s to 10 mPa·s.

The viscosity of the ink is measured at 25°C using a viscometer, for example, a TV-22 type viscometer manufactured by TOKI-SANGYO CO., LTD.

The surface tension of the ink is preferably 60 mN/m or less, more preferably in a range of 20 mN/m to 50 mN/m, and still more preferably in a range of 25 mN/m to 40 mN/m.

The surface tension of the ink is measured at 25°C using a surface tension meter, for example, by a plate method using an automatic surface tension meter (trade name, "CBVP-Z") manufactured by Kyowa Interface Science Co., Ltd.

(Method of Jetting Ink)

In the ink jetting step, the ink is jetted by a single-pass method using an ink jet recording method.

The ejection method of the ink by the ink jet recording method is not particularly limited, and for example, any known methods such as an electric charge control method of jetting the ink using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using radiation pressure, a thermal ink jet method (BUBBLE JET (registered trademark)) of heating the ink, forming air bubbles, and using generated pressure, and the like may be used.

As the ink jet recording method, particularly, it is possible to effectively use the method described in JP1979-59936A (JP-S54-59936A), which is an ink jet recording method of causing an ink to experience a rapid volume change by the action of thermal energy and jetting the ink from a nozzle by using the acting force resulting from the change of state. As the ink jet recording method, a method described in paragraphs 0093 to 0105 of JP2003-306623A can also be applied.

The application of the ink onto the substrate by the ink jet recording method can be performed by allowing the ink to be jetted from a nozzle of an ink jet head.

The method of using the ink jet head also includes a shuttle method (multi-pass method) of performing recording while a short serial head is allowed to scan in the width direction of the recorded medium, and a line method (single-pass method) of using a line head in which recording elements are aligned correspondingly to the entire range of one side of the recorded medium.

In the line method, image recording can be performed on the entire surface of the recorded medium by scanning the recorded medium in a direction intersecting the direction in which the recording elements are aligned. In the line method, a transport system such as a carriage that allows the short head to perform scanning in the shuttle method is unnecessary. In addition, in the line method, as compared with the shuttle method, a carriage is not required to move, and a complicated scanning control with the recorded medium is unnecessary, and only the recorded medium moves. Therefore, according to the line method, an increase in the recording speed of an image is achieved as compared with the shuttle method.

The ink is preferably applied using an ink jet head having a resolution of 300 dpi or more (more preferably 600 dpi or more and still more preferably 800 dpi or more). Here, dpi is an abbreviation for dot per inch, and 1 inch is 2.54 cm.

[Ink Drying Step]

The image recording method of the present disclosure may include a step of drying the ink jetted onto the substrate after the ink jetting step (hereinafter, also referred to as an "ink drying step").

A method of drying the ink is not particularly limited, and examples thereof include infrared (IR) drying, hot air drying (for example, a dryer and the like), and heating and drying with a heating device (for example, a heater, a hot plate, a heating furnace, and the like).

The method of heating and drying may be a method of combining two or more of the above-described methods.

The heating and drying can be carried out by heating the ink from at least one of the image-recorded surface side or the image non-recorded surface side of the substrate.

A heating temperature in the heating and drying of the ink is preferably 35°C or higher, more preferably 40°C or higher, still more preferably 50°C or higher, and even more preferably 60°C or higher.

The upper limit value of the heating temperature is not particularly limited, but is preferably 100°C and more preferably 90°C.

A heating time in the heating and drying of the ink is not particularly limited, but is preferably 1 second to 180 seconds, more preferably 1 second to 120 seconds, and still more preferably 1 second to 60 seconds.

[Pretreatment Liquid Applying Step]

It is preferable that the image recording method of the present disclosure further includes a step of applying a pretreatment liquid containing a coagulating agent (hereinafter, also referred to as a "pretreatment liquid applying step"). In a case of including the pretreatment liquid applying step, in the ink jetting step, the ink is jetted onto the substrate to which the pretreatment liquid has been applied.

It is preferable that the ink is directly jetted onto the substrate to which the pretreatment liquid has been applied. In this case, in Expression (2), $\theta$ is the contact angle of the ink with respect to the surface of the substrate to which the pretreatment liquid has been applied.

By providing the pretreatment liquid applying step before the ink jetting step, the components contained in the ink (for example, the pigment dispersing resin, the resin particles, and the like) are aggregated by the coagulating agent contained in the pretreatment liquid, the ink is unlikely to spread on the substrate, and the landing interference is suppressed.

(Pretreatment Liquid)

-Water-

It is preferable that the pretreatment liquid contains water.

A content of water is preferably 50% by mass or more and more preferably 60% by mass or more with respect to the total amount of the pretreatment liquid.

The upper limit of the content of water depends on the amount of other components, but is preferably 90% by mass or less and more preferably 80% by mass or less with respect to the total amount of the pretreatment liquid.

-Coagulating Agent-

The pretreatment liquid contains at least one coagulating agent.

The coagulating agent in the pretreatment liquid aggregates the components in the ink on the substrate. As a result, image quality of the image can be improved.

It is preferable that the coagulating agent is at least one selected from the group consisting of an organic acid, a polyvalent metal compound, a metal complex, and a cationic polymer.

Preferred examples of the coagulating agent also include coagulating agents described in paragraphs 0122 to 0130 of WO2020/195360A.

Hereinafter, preferred aspects of each of the organic acid, the polyvalent metal compound, the metal complex, and the cationic polymer, which can be used as the coagulating agent, will be described.

--Organic Acid--

Examples of the organic acid include an organic compound having an acidic group.

Examples of the acidic group include a phosphoric acid group, a phosphonic acid group, a phosphinic acid group, a sulfuric acid group, a sulfonic acid group, a sulfinic acid group, and a carboxy group.

Among these, from the viewpoint of the coagulation rate of the ink, as the acidic group, a phosphoric acid group or a carboxy group is preferable, and a carboxy group is more preferable.

It is preferable that at least a part of the acidic group is dissociated in the pretreatment liquid.

Examples of the organic compound having a carboxy group include (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.

Among these, from the viewpoint of coagulation rate of the ink, as the organic compound having a carboxy group, di- or higher valent carboxylic acid (hereinafter, also referred to as polyvalent carboxylic acid) is preferable, and dicarboxylic acid is more preferable.

Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable; and malonic acid, malic acid, tartaric acid, succinic acid, glutaric acid, pimelic acid, adipic acid, or citric acid is more preferable.

It is preferable that the organic acid has a low pKa (for example, 1.0 to 5.0). As a result, surface charge of particles of, for example, the pigment stably dispersed in the ink by a weakly acidic functional group such as a carboxy group, resin particles, and the like can be reduced by bringing the ink into contact with the organic acid having a lower pKa to degrade dispersion stability.

It is preferable that the organic acid has a low pKa, high solubility in water, and a valence of divalent or more. In addition, it is more preferable that the organic acid has a high buffer capacity in a pH region with a pKa lower than a pKa of the functional group (for example, a carboxy group) which stably disperses particles in the ink.

--Polyvalent Metal Compound--

Examples of the polyvalent metal compound include a polyvalent metal salt.

Examples of the polyvalent metal salt include an organic acid polyvalent metal salt and an inorganic acid polyvalent metal salt.

As the organic acid polyvalent metal salt, a polyvalent metal salt of the above-described organic acid (for example, formic acid, acetic acid, or benzoic acid) is preferable.

As the inorganic acid polyvalent metal salt, a nitric acid polyvalent metal salt, a hydrochloric acid polyvalent metal salt, or a thiocyanic acid polyvalent metal salt) is preferable.

Examples of the polyvalent metal salt include salts of alkaline earth metals of Group 2 (such as magnesium and calcium) in the periodic table, salts of transition metals of Group 3 (such as lanthanum) in the periodic table, salts of metals of Group 13 (such as aluminum) in the periodic table, and salts of lanthanides (such as neodymium).

As the polyvalent metal salt, a calcium salt, a magnesium salt, or an aluminum salt is preferable, and a calcium salt or a magnesium salt is more preferable.

As the polyvalent metal compound, an organic acid polyvalent metal salt is preferable, and an organic acid calcium salt or an organic acid magnesium salt is more preferable.

It is preferable that at least a part of the polyvalent metal compound is dissociated into polyvalent metal ions and counterions in the pretreatment liquid.

--Metal Complex--

It is preferable that the metal complex contains at least one selected from the group consisting of zirconium, aluminum, and titanium as a metal element.

As the metal complex, a metal complex containing, as a ligand, at least one selected from the group consisting of acetate, acetylacetonate, methylacetoacetate, ethylacetoacetate, octylene glycolate, butoxyacetylacetonate, lactate, a lactate ammonium salt, and triethanol aminate is preferable.

The metal complex may be a commercially available product. Various organic ligands, particularly various multidentate ligands which are capable of forming metal chelate catalysts are commercially available. Therefore, the metal complex may be a metal complex prepared by combining a commercially available organic ligand with a metal.

--Cationic Polymer--

It is preferable that the cationic polymer is a homopolymer of a cationic monomer having a primary to tertiary amino group or a quaternary ammonium base, or a copolymer or a condensed polymer of a cationic monomer and a non-cationic monomer. The cationic polymer may be used in any form of a water-soluble polymer or a water-insoluble polymer (that is, latex particles).

Examples of the cationic polymer include polyvinylpyridine salt, polyalkylaminoethyl acrylate, polyalkylaminoethyl methacrylate, polyvinylimidazole, polyethyleneimine, polybiguanide, polyguanide, polyallylamine, and derivatives thereof.

From the viewpoint of viscosity of the pretreatment liquid, it is preferable that a weight-average molecular weight of the cationic polymer is small. In a case where the pretreatment liquid is applied onto a resin substrate by an ink jet recording method, the weight-average molecular weight thereof is preferably 1,000 to 500,000, more preferably 1,500 to 200,000, and still more preferably 2,000 to 100,000. It is advantageous that the weight-average molecular weight thereof is 1,000 or more from the viewpoint of coagulation rate. It is advantageous that the weight-average molecular weight thereof is 500,000 or less from the viewpoint of jetting reliability. However, the weight-average molecular weight thereof is not limited thereto in a case where the pretreatment liquid is applied onto a resin substrate by a method other than the ink jet recording method.

A content of the coagulating agent in the pretreatment liquid is preferably 0.1% by mass to 40% by mass, more preferably 0.1% by mass to 30% by mass, still more preferably 1% by mass to 20% by mass, and even more preferably 1% by mass to 10% by mass with respect to the total amount of the pretreatment liquid.

-Resin-

It is preferable that the pretreatment liquid contains at least one resin.

The resin in the pretreatment liquid contributes to film forming properties of the pretreatment liquid (that is, formability of the pretreatment liquid film).

As the resin in the pretreatment liquid, the same resin as the resin in the ink (for example, the resin particles) can be used.

A content of the resin in the pretreatment liquid is not particularly limited.

The content of the resin is preferably 0.5% by mass to 30% by mass, more preferably 1% by mass to 20% by mass, and particularly preferably 1% by mass to 15% by mass with respect to the total amount of the pretreatment liquid.

-Water-Soluble Organic Solvent-

The pretreatment liquid may contain at least one water-soluble organic solvent.

As the water-soluble organic solvent in the pretreatment liquid, the same water-soluble organic solvent as the water-soluble organic solvent which can be contained in the ink can be used.

-Additive-

The pretreatment liquid may contain an additive such as a surfactant, a water-soluble resin, a co-sensitizer, an ultraviolet absorbing agent, an antioxidant, a fading inhibitor, a conductive salt, and a basic compound, as necessary.

-Physical Properties-

A pH (25°C) of the pretreatment liquid is preferably 2.0 to 7.0 and more preferably 2.0 to 4.0. The pH of the pretreatment liquid is measured by the same method as in the pH of the ink.

From the viewpoint of coating properties of the pretreatment liquid, a viscosity of the pretreatment liquid is preferably 0.5 mPa·s to 10 mPa·s and more preferably 1 mPa·s to 5 mPa·s. The viscosity is a value measured at 25°C using a viscometer. The viscosity of the pretreatment liquid is measured by the same method as in the viscosity of the ink.

A surface tension of the pretreatment liquid is preferably 60 mN/m or less, more preferably 20 mN/m to 50 mN/m, and still more preferably 30 mN/m to 45 mN/m. The surface tension is a value measured at a temperature of 25°C. The surface tension of the pretreatment liquid is measured by the same method as in the surface tension of the ink.

(Method of Applying Pretreatment Liquid)

A method of applying the pretreatment liquid is not particularly limited, and examples thereof include known methods such as a coating method, a dipping method, and an ink jet recording method.

Examples of the coating method include known methods using a bar coater, an extrusion die coater, an air doctor coater, a blade coater, a rod coater, a knife coater, a squeeze coater, a reverse roll coater, or the like.

It is preferable that the pretreatment liquid is applied by a coating method.

[Pretreatment Liquid Drying Step]

The image recording method according to the present disclosure may include a step of drying the pretreatment liquid applied onto the substrate after the pretreatment liquid applying step.

A method of drying the pretreatment liquid is not particularly limited, but for example, the same method as the method exemplified in the method of drying the ink can be applied.

A preferred range of drying conditions (for example, the heating temperature and the heating time) of the pretreatment liquid is the same as a preferred range of the drying conditions of the ink.

[Other Steps]

In the image recording method of the present disclosure, it is preferable that the colorant contained in the ink is a white coloring material, as described above. That is, the ink jetted in the ink jetting step is preferably a white ink.

In a case where the white ink is jetted in the ink jetting step, the method may include a step of recording a non-white image using the non-white ink before the ink jetting step or after the ink jetting step.

The non-white ink means a colored ink other than the white ink (for example, a cyan ink, a magenta ink, a yellow ink, and a black ink).

The non-white image means an image (for example, a cyan image, a magenta image, a yellow image, and a black image) recorded using a non-white ink.

The non-white image may be an image recorded using only one kind of non-white ink or an image recorded using two or more kinds of non-white inks.

An example of the aspect in which the non-white image is recorded before the ink jetting step includes an aspect in which the non-white image (for example, a pattern image such as a character or a figure) is disposed between the substrate and the white image (for example, a solid image). This aspect is an aspect in which a non-white image with a white image as a background is visually recognized through the substrate from the image non-recorded surface side of the substrate.

An example of the aspect in which the non-white image is recorded after the ink jetting step includes an aspect in which the non-white image (for example, a pattern image such as a character or a figure) is disposed on the white image (for example, a solid image). This aspect is an aspect in which a non-white image (for example, a pattern image such as a character or a figure) having a white image (for example, a solid image) as a background is visually recognized from the image-recorded surface side of the substrate.

From the viewpoint of more effectively suppressing blocking of the multicolor image including the white image and the non-white image, an aspect is preferable in which the step of recording the non-white image is performed before the ink jetting step, and the non-white image is disposed between the substrate and the white image.

<Example of Image Recording Apparatus>

Fig. 1 is a diagram conceptually showing an example of an image recording apparatus used in an image recording method of the present disclosure.

As shown in Fig. 1, one embodiment of the ink jet recording device is an example of an ink jet recording device including a transport mechanism which transports a resin substrate by a roll-to-roll method; and is a device that unwinds a substrate A1 having a long film shape wound in a roll shape by an unwinding device R1, transports the unwound substrate A1 in a direction indicated by a block arrow in a state where a tension is applied, passes the unwound substrate A1 through a pretreatment liquid applying device P1, a pretreatment liquid drying zone DP1, a first ink jet head IJ1, a first drying zone D1, a second ink jet head IJ2, and a drying zone D2 in this order, and finally winds the substrate A1 by a winding device R2 including a winding core in a state where a tension P is applied.

The substrate A1 is transported in a state where tension is applied and is wound in a state where tension P is applied. The tension during the transport may be the same tension as the tension P during the winding or may be a tension different from the tension P. In addition, the tension may vary depending on the position in the transport direction, or may be uniform.

The image recording apparatus according to one embodiment may include a tension adjusting unit for adjusting the tension of the non-permeable substrate.

Examples of the tension adjusting unit include

a powder brake provided in the unwinding device R1 and/or the winding device R2,
a dancer roll provided in the middle of the transport path, and
a control device (for example, a tension controller) that controls each tension by adjusting each condition of the image recording apparatus.

In addition, the image recording apparatus according to one embodiment may include a tension measuring unit (for example, a tension meter) for measuring the tension of the non-permeable substrate.

Since Fig. 1 is a conceptual diagram, the transport path of the substrate A1 is simplified, and the substrate A1 is shown as being transported in one direction. However, it goes without saying that the transport path of the substrate A1 may meander in some cases in reality.

The method of transporting the substrate A1 can be appropriately selected from various web transport methods using a drum, a roll, and the like.

A pretreatment liquid applying device P1, a pretreatment liquid drying zone DP1, a first ink jet head IJ1, a first drying zone D1, a second ink jet head IJ2, and a drying zone D2 are disposed in this order downstream of the substrate A1 in the transport direction with respect to the unwinding device R1 for unwinding the substrate A1, in this order from the upstream side of the substrate A1 in the transport direction.

The pretreatment liquid, the first ink, and the second ink are respectively applied by the pretreatment liquid applying device P1, the first ink jet head IJ1, and the second ink jet head IJ2.

In this case, at least one of the heating and drying of the pretreatment liquid in the pretreatment liquid drying zone DP1, the heating and drying of the first ink in the first drying zone D1, or the heating and drying of the second ink in the second drying zone D2 can be performed.

In the first drying zone D1, the heating and drying of the pretreatment liquid may be substantially performed in addition to the heating and drying of the first ink.

In the second drying zone D2, the heating and drying of the pretreatment liquid and/or the heating and drying of the first ink may be substantially performed in addition to the heating and drying of the second ink.

Further, in a case where the resin substrate passes through each drying zone in a state where the temperature of each drying zone is set to room temperature, the heating and drying can be omitted.

In an embodiment, the first ink is any one of a non-white ink containing water and a colorant for recording a non-white image or a white ink containing water and a colorant for recording a white image, and the second ink is the other of the non-white ink and the white ink.

A surface treatment unit (not shown) for performing a surface treatment (preferably a corona treatment) on at least one of the front surface or the back surface of the substrate A1 may be provided upstream of the pretreatment liquid applying device P1.

Further, a cooling zone for cooling the recorded multicolor image (that is, the multicolor image including the white image and the non-white image) may be provided downstream of the second drying zone D2.

The first ink jet head IJ1 and the second ink jet head IJ2 may be shuttle heads, but from the viewpoint of increasing the speed of image recording, a line head in which a plurality of jetting ports (nozzles) are arranged on the substrate A1 having a long film shape in the width direction is preferable.

Each of the first ink jet head IJ1 and the second ink jet head IJ2 may be used alone or a plurality of kinds thereof.

Examples of a combination of the first ink jet head IJ1 and the second ink jet head IJ2 include a combination in which the first ink jet head IJ1 is formed of four ink jet heads corresponding to four colors of cyan, magenta, yellow, and black (note; these four ink jet heads are arranged in the transport direction of the resin substrate) and the second ink jet head IJ2 is formed of one ink jet head corresponding to white (that is, white).

Further, other examples of the combination of the first ink jet head IJ1 and the second ink jet head IJ2 include a combination in which the first ink jet head IJ1 is formed of one ink jet head corresponding to white and the second ink jet head IJ2 is formed of four ink jet heads corresponding to four colors of cyan, magenta, yellow, and black (note; these four ink jet heads are arranged in the transport direction of the substrate).

In the ink jet recording using the image recording apparatus according to one embodiment,

first, the substrate A1 having a long film shape wound in a roll shape is unwound by the unwinding device R1, the unwound substrate A1 is transported in a direction of a block arrow in a state where a tension is applied, the pretreatment liquid is applied onto the transported substrate A1 by the pretreatment liquid applying device P1, next, the pretreatment liquid is dried in the pretreatment liquid drying zone DP1 as necessary, next, the first ink (that is, any one of the non-white ink or the white ink) is applied by the first ink jet head IJ1, next, the first ink is dried in the first drying zone D1 as necessary, next, the second ink (that is, the other of the non-white ink or the white ink) is applied by the second ink jet head IJ2, and next, the second ink is dried in the second drying zone D2 as necessary.

As a result, a multicolor image including the first image (that is, any one of the non-white image or the white image) derived from the first ink and the second image (that is, the other of the non-white image or the white image) derived from the second ink is obtained.

Next, the obtained multicolor image is cooled as necessary, and finally, the substrate A1 with the multicolor image in a state where the tension P is applied is wound by the winding device R2 including the winding core.

In one embodiment, the application and drying of the pretreatment liquid may be omitted.

In addition, in one embodiment, the non-white image may not be recorded, and only the white image may be recorded.

Examples

Hereinafter, examples of the present disclosure will be shown, but the present disclosure is not limited to the following examples.

<Preparation of White Ink>

(Preparation of White Pigment Dispersion Liquid)

-Synthesis of Pigment Dispersing Agent P1-

965 g of dipropylene glycol was added to a 5000 mL three-neck flask provided with a stirrer and a cooling pipe and heated to 85°C in a nitrogen atmosphere.

A solution I obtained by dissolving 640 g of benzyl methacrylate, 340 g of methacrylic acid, and 19.94 g of 2-mercaptopropionic acid in 370.28 g of dipropylene glycol, and

a solution II obtained by dissolving 17.69 g of t-butyl peroxy-2-ethylhexanoate (product name, "PERBUTYL O", manufactured by NOF Corporation) in 221.17 g of dipropylene glycol
were respectively prepared.

The solution I was added dropwise to the three-neck flask for 4 hours, and the solution II was added dropwise thereto for 5 hours. After completion of the dropwise addition, the solution was allowed to further react for 2 hours. The disappearance of the monomers was confirmed by $^1$H-NMR.

The obtained reaction solution was heated to 70°C, 248.02 g of a 50 mass% potassium hydroxide aqueous solution was added thereto, 107.48 g of dipropylene glycol and 75.52 g of pure water were added thereto, and the solution was stirred, thereby obtaining a 37 mass% solution of a random polymer. This random polymer was defined as a pigment dispersing agent P1.

The structural units constituting the obtained random polymer were confirmed by $^1$H-NMR. In addition, the weight-average molecular weight (Mw) was acquired by GPC. The weight-average molecular weight (Mw) of the obtained pigment dispersing agent P1 was 8400, and the acid value thereof was 221.7 mgKOH/g.

-Preparation of White Pigment Dispersion Liquid-

The pigment dispersing agent P1 (150 parts by mass) was dissolved in water to prepare a polymer solution in which the concentration of the pigment dispersing agent P1 was 25% by mass.

96 parts by mass of the polymer solution, 300 parts by mass of C.I. Pigment White 6 (trade name, "JR-405", manufactured by Tayca Co., Ltd., titanium dioxide particles) as a white pigment, and 270 parts by mass of water were mixed to obtain a mixed solution. A potassium hydroxide aqueous solution was added to the obtained mixed solution, and the pH (25°C) after neutralization was adjusted to 8.7.

Next, the mixed solution after neutralization was subjected to a dispersion treatment for 3 hours using a beads mill (bead diameter: 0.1 mmφ, zirconia beads). In this manner, a white pigment dispersion liquid (uncrosslinked dispersion liquid) PD1 in which the white pigment was dispersed by the pigment dispersing agent P1 was obtained.

Next, ultrafiltration was performed by allowing ion exchange water to flow through the obtained white pigment dispersion liquid (uncrosslinked dispersion liquid) PD1 at a flow rate of 600 mL per minute using an ultrafiltration device (cross-flow type ultrafilter (UF), manufactured by Sartorius AG). The liquid temperature was maintained at 25°C, and the ultrafiltration was performed three times by setting one time the volume of the charged liquid to once. Ion exchange water was added to the liquid after the ultrafiltration, thereby obtaining a dispersion liquid after ultrafiltration in which the concentration of the white pigment was 45% by mass and the concentration of the pigment dispersing agent P1 was 3.6% by mass.

1.35 parts by mass of trimethylolpropane polyglycidyl ether (product name, "Denacol EX-321", manufactured by Nagase ChemteX Corporation) as a crosslinking agent and 14.5 parts by mass of a boric acid aqueous solution (concentration of boric acid: 4% by mass) were added to 136 parts by mass of the dispersion liquid after ultrafiltration, and the mixture was allowed to react at 70°C for 6 hours and cooled to 25°C. In this manner, the pigment dispersing agent P1 in the dispersion liquid was crosslinked to form a pigment dispersing agent P1a which is a crosslinked polymer dispersing agent, and a white pigment dispersion liquid (crosslinked dispersion liquid) in which the white pigment was dispersed by the pigment dispersing agent P1a was obtained.

Ion exchange water was added to the obtained crosslinked dispersion liquid such that the concentration of the pigment was set to 15% by mass. Ultrafiltration was performed by allowing the crosslinked dispersion liquid to which ion exchange water had been added to flow into an ultrafiltration device (cross-flow type ultrafilter (UF), manufactured by Sartorius AG) provided with a polyether sulfone (PESU) film (size of micropores: 0.1 μm) at a flow rate of 600 mL per minute. At this time, the liquid temperature was adjusted to 25°C, and the ultrafiltration was performed three times by setting 1 time the volume magnification of the charged liquid as once. Next, ion exchange water was added such that the concentration of the white pigment was set to 45% by mass. In this manner, a white pigment dispersion liquid was obtained.

The acid value of the pigment dispersing agent P1a contained in the white pigment dispersion liquid was 144 mgKOH/g. Further, the concentration of the pigment dispersing agent P1a was 3.6% by mass.

(Preparation of White Ink W1)

The following components were mixed to prepare a white ink W1.

-Composition of White Ink W1-

· White pigment dispersion liquid described above: 12% by mass in terms of content of white pigment
· Propylene glycol (PG) [water-soluble organic solvent]: 28% by mass
· Propylene glycol monomethyl ether (PGmME) [water-soluble organic solvent]: 2% by mass
· BYK-347 (manufactured by BYK-Chemie GmbH) [silicone-based surfactant]: 0.20% by mass
· OLFINE E1010 (manufactured by Nissin Chemical Industry Co., Ltd.) [acetylene glycol-based surfactant]: 0.60% by mass
· SOLSPERSE 43000 (manufactured by Lubrizol Japan Ltd.) [water-soluble polymer]: 1% by mass
· PVP-K15 (polyvinylpyrrolidone K15): 0.12% by mass
· Urea: 0.50% by mass
· SNOWTEX XS (manufactured by Nissan Chemical Corporation) [colloidal silica dispersion liquid]: 0.1% by mass in terms of content of colloidal silica particles
· NEOCRYL A1091 (manufactured by Covestro Coating Resins) [aqueous dispersion liquid of styrene-acrylic resin particles]: 5.0% by mass in terms of content of styrene-acrylic resin particles
· Water: remaining amount set such that total amount of white ink was 100% by mass

(Preparation of White Inks W2 to W6)

White inks W2 to W6 were prepared by the same method as the white ink W1, except that the content of BYK-347 and the content of OLFINE E1010 in the white ink W1 were changed to the contents shown below, and the content of water was appropriately adjusted.

-White Ink W2-

· BYK-347: 0.10% by mass
· OLFINE E1010: 0.60% by mass

-White Ink W3-

· OLFINE E1010: 0.60% by mass
BYK-347 was not contained.

-White Ink W4-

· BYK-347: 0.30% by mass
· OLFINE E1010: 0.60% by mass

-White Ink W5-

· OLFINE E1010: 0.10% by mass
BYK-347 was not contained.

-White Ink W6-

· BYK-347: 0.70% by mass
· OLFINE E1010: 1.0% by mass

<Preparation of Pretreatment Liquid>

The components described below were mixed to prepare a pretreatment liquid. The surface tension of the pretreatment liquid was 35 mN/m.
-Composition of Pretreatment Liquid-

· Glutaric acid [coagulating agent]: 6.1% by mass
· Propylene glycol (PG) [water-soluble organic solvent]: 20% by mass
· OLFINE E1010 (Nissin Chemical Industry Co., Ltd.) [surfactant]: 0.5% by mass
· SUPERFLEX 500M (DKS Co., Ltd.) [aqueous dispersion of urethane resin particles]: 7.0% by mass
· Triisopropanolamine [pH adjuster]: 0.2% by mass
· BYK024 (BYK-Chemie GmbH) [antifoaming agent]: 0.01% by mass
· Ultrapure water: remaining amount such that total amount of pretreatment liquid reached 100% by mass

<Preparation of Image Recording Apparatus>

As an image recording apparatus used for evaluation, the image recording apparatus shown in Fig. 1 was prepared.
A gravure coater was used as the pretreatment liquid applying device P1.
The drying method in the pretreatment liquid drying zone DP1 was hot air drying.

The first ink jet head IJ1 and the first drying zone D1 were set not to operate.

As a second ink jet head IJ2, an ink jet head for a white ink was disposed.

Before jetting the ink, as a preliminary step, the ink jet head was wiped with a cleaning cloth (product name "Toraysee" (registered trademark), manufactured by Toray Industries, Inc.) impregnated with an inkjet cleaning liquid (product name "C-FJ-CC", manufactured by FUJIFILM Corporation).

A drying method in the second drying zone D2 was hot air drying.

An air cooling zone (not shown) was provided between the second drying zone D2 and the winding device R2.

A 1200 dpi (dot per inch, 1 inch is 2.54 cm)/20 inch width piezo full line head (total number of nozzles: 2048) was used as an ink jet head.

The driving frequency of the ink jet head was set to 30 kHz.

The white ink was adjusted to be jetted with two types of liquid droplet sizes shown in Table 1. In Comparative Example 2, the liquid droplet size was only one type.

<Image Recording>

Image recording was performed using the above-described image recording apparatus.

The image recording apparatus was equipped with the pretreatment liquid and the white ink.

As a non-permeable substrate, an OPP film (product name "PYLEN film-OT", manufactured by Toyobo Co., Ltd., thickness: 25 μm) was used.

First, the non-permeable substrate was unwound by the unwinding device R1, and the unwound non-permeable substrate was transported in a state in which a tension was applied. The non-permeable substrate being transported was coated with the pretreatment liquid by the gravure coater as the pretreatment liquid applying device P1.

Next, the pretreatment liquid was dried in the pretreatment liquid drying zone DP1.

Next, non-permeable substrate was allowed to pass through the first ink jet head IJ1 and the first drying zone D1, next, the white ink is applied in a solid image shape by the second ink jet head IJ2 onto the region of the non-permeable substrate to which the pretreatment liquid had been applied.

Next, the white ink was dried in the second drying zone D2.

By the above operation, a white image (solid image) derived from the white ink was recorded on the non-permeable substrate having a length of 1000 m, and an image recorded material was obtained.

Next, the obtained image recorded material was air-cooled, and then wound by the winding device R2 including a winding core to obtain a roll of the image recorded material.

An application amount of the pretreatment liquid was 1.7 g/m$^2$.

The pretreatment liquid was dried under the conditions of 40°C and 3 seconds.

The white ink was dried under the conditions of 70°C and 20 seconds.

(Contact Angle of Ink on Substrate to which Pretreatment Liquid was Applied)

The pretreatment liquid was applied onto the substrate and dried, and then the substrate to which the pretreatment liquid was applied was cut out to obtain a measurement sample. 2.0 μL of white ink was added dropwise onto the surface of the measurement sample with the pretreatment liquid applied, and the contact angle of the ink film was measured after 300 milliseconds.

The contact angle was measured at 20°C using a contact angle meter (product name "DM-501", manufactured by Kyowa Interface Science Co., Ltd.).

The obtained image recorded material was used to evaluate streaks, drying properties, and sharpness. The evaluation method was as follows.

(Streaks)

The roll of the obtained image recorded material was unwound. In the image recorded material having a length of 1000 m, a portion corresponding to the width of one ink jet head was visually observed, and the number of streaks generated in the white image of the image recorded material along the transport direction of the substrate was confirmed. The evaluation standard was as follows.

AA: no streaks were confirmed.
A: number of streaks was 1 or more and less than 4.
B: number of streaks was 4 or more and less than 8.
C: number of streaks was 8 or more and less than 15.
D: number of streaks was 15 or more.

(Drying Properties)

The roll of the obtained image recorded material was unwound, and the drying properties were evaluated at a position of approximately 100 m from the position where the winding was completed. Specifically, it was checked whether a peeling sound caused by unwinding was heard. In addition, it was visually confirmed whether or not the transfer material was present on the back surface of the non-permeable substrate. The evaluation standard was as follows.

AA: At a position near 100 m from the position at the end of winding, no peeling sound caused by unwinding was heard, and no transfer material was confirmed on the back surface of the non-permeable substrate.
A: At a position near 100 m from the position at the end of winding, a peeling sound caused by unwinding was heard, but no transfer material was confirmed on the back surface of the non-permeable substrate.
B: At a position near 100 m from the position at the end of winding, peeling sound caused by unwinding was continuously heard, but no transfer material was confirmed on the back surface of the non-permeable substrate.
C: At a position near 100 m from the position at the end of winding, a colorless and transparent transfer material was confirmed on the back surface of the non-permeable substrate.
D: At a position near 100 m from the position at the end of winding, a transfer material of the white image was confirmed on the back surface of the non-permeable substrate.

(Sharpness)

From a position 10 cm away from the image recorded material, the frame line (a boundary line between the white image and a portion where the white image was not recorded) of the white image in the image recorded material was visually observed. It was checked whether or not the frame line was a smooth straight line (specifically, there was no cockling). In a case where the frame line was a smooth straight line, the evaluation was finished. In a case where the frame line was not a smooth straight line, the frame line was observed from a position 30 cm away from the image recorded material in the same manner. In a case where the frame line was a smooth straight line, the evaluation was finished. In a case where the frame line was not a smooth straight line, the frame line was observed from a position 50 cm away from the image recorded material in the same manner. Based on the observation results, sharpness was evaluated. The evaluation standard was as follows.

AA: The frame line was observed from a position 10 cm away, and the frame line was a smooth straight line.
A: The frame line was observed from a position 30 cm away, and the frame line was a smooth straight line.
B: The frame line was observed from a position 50 cm away, and the frame line was a smooth straight line.
C: The frame line was observed from a position 50 cm away, and the cockling was confirmed in a part of the frame line.
D: The frame line was observed from a position 50 cm away, and the cockling was confirmed in the entire frame line.

The evaluation results are shown in Table 1.
In Table 1, $a_1$ means a ratio of the number of times of jetting of the first liquid droplets to the total number of times of jetting of the first liquid droplets and the second liquid droplets, $a_2$ means a ratio of the number of times of jetting of the second liquid droplets to the total number of times of jetting of the first liquid droplets and the second liquid droplets, $V_1$ means the size of the first liquid droplets, $V_2$ means the size of the second liquid droplets, and $\theta$ means a contact angle of the ink with respect to the surface of the substrate to which the pretreatment liquid has been applied.
In Table 1, the calculated value of "$V_2/V_1$" was described in the column of Expression (1), the calculated value of "$\{V_1^{1/3} \times (1 + \cos\theta)\}^2 \times a_1 + \{V_2^{1/3} \times (1 + \cos\theta)\}^2 \times a_2$" was described in the column of Expression (2), and the calculated value of "$[\{V_1^{1/3} \times (1 + \cos\theta)\}^2 - \{V_2^{1/3} \times (1 + \cos\theta)\}^2] \times a_1$" was described in the column of Expression (3). In Comparative Example 2, since only one type of liquid droplet was used, $V_2$ was calculated as the same value as $V_1$.

[Table 1]

| | Type of ink | First liquid droplet | | Second liquid droplet | | θ (°) | Expression (1) | Expression (2) | Expression (3) | Evaluation | | |
|---|---|---|---|---|---|---|---|---|---|---|---|---|
| | | $a_1$ | $V_1$ (pL) | $a_2$ | $V_2$ (pL) | | | | | Streaks | Drying properties | Sharpness |
| Example 1 | W1 | 0.75 | 3.30 | 0.25 | 2.00 | 42 | 0.61 | 6.3 | 2.5 | A | C | B |
| Example 2 | W1 | 0.5 | 3.30 | 0.5 | 2.00 | 42 | 0.61 | 5.8 | 3.8 | A | B | B |
| Example 3 | W1 | 0.25 | 3.30 | 0.75 | 2.00 | 42 | 0.61 | 5.3 | 7.6 | B | B | C |
| Example 4 | W1 | 0.5 | 3.30 | 0.5 | 1.65 | 42 | 0.50 | 5.5 | 5.0 | A | B | C |
| Example 5 | W1 | 0.5 | 3.30 | 0.5 | 2.50 | 42 | 0.76 | 6.2 | 2.3 | A | B | A |
| Example 6 | W1 | 0.5 | 3.30 | 0.5 | 2.80 | 42 | 0.85 | 6.4 | 1.4 | A | C | A |
| Example 7 | W2 | 0.5 | 3.30 | 0.5 | 2.00 | 48 | 0.61 | 5.3 | 3.5 | B | B | A |
| Example 8 | W3 | 0.5 | 3.30 | 0.5 | 2.00 | 59 | 0.61 | 4.4 | 2.9 | C | A | A |
| Example 9 | W4 | 0.5 | 3.30 | 0.5 | 2.00 | 31 | 0.61 | 6.6 | 4.3 | AA | C | B |
| Example 10 | W1 | 0.5 | 3.85 | 0.5 | 2.20 | 42 | 0.57 | 6.3 | 4.6 | AA | C | B |
| Example 11 | W1 | 0.5 | 4.24 | 0.5 | 2.42 | 42 | 0.57 | 6.7 | 5.0 | AA | C | C |
| Example 12 | W1 | 0.5 | 2.97 | 0.5 | 1.80 | 42 | 0.61 | 5.4 | 3.6 | A | B | A |
| Example 13 | W1 | 0.5 | 3.47 | 0.5 | 1.98 | 42 | 0.57 | 5.9 | 4.3 | AA | B | B |
| Example 14 | W1 | 0.5 | 2.80 | 0.5 | 1.80 | 42 | 0.64 | 5.3 | 3.1 | A | A | A |
| Comparative Example 1 | W1 | 0.5 | 4.80 | 0.5 | 2.00 | 42 | 0.42 | 6.7 | 7.6 | AA | D | C |
| Comparative Example 2 | W1 | 1 | 3.30 | - | - | 42 | 1 | 6.7 | 0 | A | D | AA |
| Comparative Example 3 | W5 | 0.5 | 3.30 | 0.5 | 2.00 | 73 | 0.61 | 3.2 | 2.1 | D | AA | A |
| Comparative Example 4 | W6 | 0.5 | 3.30 | 0.5 | 2.00 | 18 | 0.61 | 7.2 | 4.8 | AA | D | B |

As shown in Table 1, in Examples 1 to 14, a step of jetting ink containing water and a colorant onto a substrate as at least two types of liquid droplets having liquid droplet sizes different from each other by a single-pass method using an ink jet recording method is included, two types liquid droplets of the at least two types of liquid droplets are defined as a first liquid droplet and a second liquid droplet, and $V_1$, $V_2$, $a_1$, $a_2$, and $\theta$, which are parameters related to the first liquid droplet and the second liquid droplet, satisfy Expression (1) and Expression (2). Therefore, the drying properties were excellent, and the streaks of the recorded image were suppressed.

On the other hand, in Comparative Example 1, it was found that the drying properties were poor because the ink was jetted only with one liquid droplet size.

In Comparative Example 2, it was found that since "$V_2/V_1$" was less than 0.45, the drying properties were deteriorated.

In Comparative Example 3, since "$\{V_1^{1/3} \times (1 + \cos\theta)\}^2 \times a_1 + \{V_2^{1/3} \times (1 + \cos\theta)\}^2 \times a_2$" was less than 3.5, streaks were confirmed in the image.

In Comparative Example 4, it was found that, since "$\{V_1^{1/3} \times (1 + \cos\theta)\}^2 \times a_1 + \{V_2^{1/3} \times (1 + \cos\theta)\}^2 \times a_2$" was greater than 7.0, the drying properties were poor.

In Example 4, since "$V_2/V_1$" was 0.5 to 0.8, the drying properties were excellent as compared with Example 5.

In Example 6, it was found that, since "$\{V_1^{1/3} \times (1 + \cos\theta)\}^2 \times a_1 + \{V_2^{1/3} \times (1 + \cos\theta)\}^2 \times a_2$" was 4.5 or more, streaks of the recorded image were further suppressed.

In Examples 1 to 4, 7, and 11 to 13, it was found that, since "$\{V_1^{1/3} \times (1 + \cos\theta)\}^2 \times a_1 + \{V_2^{1/3} \times (1 + \cos\theta)\}^2 \times a_2$" was 6.2 or less, the drying properties were more excellent.

In Examples 1, 2, 5 to 10, and 12 to 14, it was found that, since "$[\{V_1^{1/3} \times (1 + \cos\theta)\}^2 - \{V_2^{1/3} \times (1 + \cos\theta)\}^2] \times a_1$" was 4.8 or less, the sharpness of the image was excellent.

Next, image recording was performed using the cyan ink in addition to the above-described pretreatment liquid and white ink W1.

<Preparation of Cyan Ink C1>

The following components were mixed to prepare a cyan ink C1.

-Composition of Cyan Ink C1-

· Cyan pigment dispersion liquid (product name "APD4000 Cyan", manufactured by Fujifilm Imaging Colorants Ltd.): 3.4% by mass in terms of content of cyan pigment
· Propylene glycol (PG) [water-soluble organic solvent]: 28% by mass
· Propylene glycol monomethyl ether (PGmME) [water-soluble organic solvent]: 2% by mass
· BYK-347 (manufactured by BYK-Chemie GmbH) [silicone-based surfactant]: 0.2% by mass
· OLFINE E1010 (manufactured by Nissin Chemical Industry Co., Ltd.) [acetylene glycol-based surfactant]: 0.60% by mass
· SOLSPERSE 43000 (manufactured by Lubrizol Japan Ltd.) [water-soluble polymer]: 1% by mass
· PVP-K15 (polyvinylpyrrolidone K15): 0.12% by mass
· Urea: 0.50% by mass
· SNOWTEX XS (manufactured by Nissan Chemical Corporation) [colloidal silica dispersion liquid]: 0.1% by mass in terms of content of colloidal silica particles
· NEOCRYL A1091 (manufactured by Covestro Coating Resins) [aqueous dispersion liquid of styrene-acrylic resin particles]: 7.0% by mass in terms of content of styrene-acrylic resin particles
· Water: remaining amount set such that total amount of cyan ink was 100% by mass

<Preparation of Image Recording Apparatus>

As an image recording apparatus used for evaluation, the image recording apparatus shown in Fig. 1 was prepared.

A gravure coater was used as the pretreatment liquid applying device P1.

The drying method in the pretreatment liquid drying zone DP1 was hot air drying.

As a first ink jet head IJ1, an ink jet head for a cyan ink was disposed.

As a second ink jet head IJ2, an ink jet head for a white ink was disposed.

The drying method in the first drying zone D1 and the second drying zone D2 was hot air drying.

An air cooling zone (not shown) was provided between the second drying zone D2 and the winding device R2.

A 1200 dpi (dot per inch, 1 inch is 2.54 cm)/20 inch width piezo full line head (total number of nozzles: 2048) was used as an ink jet head.

The driving frequency of the ink jet head was set to 30 kHz.

The cyan ink was adjusted to be jetted with a liquid droplet size (2.00 pL) of $V_2$ shown in Example 1.

The white ink was adjusted to be jetted in two liquid droplet sizes shown in Example 1.

<Image Recording>

Image recording was performed using the above-described image recording apparatus.

The image recording apparatus was equipped with the pretreatment liquid, the cyan ink C1, and the white ink W1.

As a non-permeable substrate, an OPP film (product name "PYLEN film-OT", manufactured by Toyobo Co., Ltd., thickness: 25 μm) was used.

First, the non-permeable substrate was unwound by the unwinding device R1, the unwound non-permeable substrate was transported in a state where tension was applied, and the pretreatment liquid was applied to the transported non-permeable substrate by a gravure coater as the pretreatment liquid applying device P1.

Next, the pretreatment liquid was dried in the pretreatment liquid drying zone DP1.

Next, the cyan ink C1 was applied in the form of a solid image onto the region of the non-permeable substrate to which the pretreatment liquid had been applied, by the first ink jet head IJ1.

Next, the cyan ink C1 was dried in the first drying zone D1.

Next, the white ink W1 was applied in the form of a solid image onto the region of the non-permeable substrate to which the cyan ink C1 had been applied, by the second ink jet head IJ2.

Next, the white ink W1 was dried in the second drying zone D2.

By the above operation, a cyan ink image (solid image) derived from the cyan ink C1 and a white image (solid image) derived from the white ink W1 were recorded on a non-permeable substrate having a length of 1000 m, and an image recorded material was obtained.

Next, the obtained image recorded material was air-cooled, and then wound by the winding device R2 including a winding core to obtain a roll of the image recorded material.

An application amount of the pretreatment liquid was 1.7 g/m$^2$.

The pretreatment liquid was dried under the conditions of 40°C and 3 seconds.

The cyan ink C1 and the white ink W1 were dried under the conditions of 70°C and 20 seconds.

(Contact Angle of Ink on Substrate to which Cyan Ink C1 was Applied)

The cyan ink C1 was applied onto the substrate and dried, and then the substrate to which the cyan ink C1 was applied was cut out to obtain a measurement sample. 2.0 μL of the white ink was added dropwise onto a surface of the measurement sample to which the cyan ink C1 was applied, and the contact angle of the ink film after 300 milliseconds was measured.

The contact angle was measured at 20°C using a contact angle meter (product name "DM-501", manufactured by Kyowa Interface Science Co., Ltd.).

The contact angle was 40°.

In a case where streaks, drying properties, and sharpness were evaluated by the same method as the above-described evaluation using the obtained image recorded material, all evaluation results were A.

The disclosure of Japanese Patent Application No. 2023-019432 filed on February 10, 2023 is incorporated in the present specification by reference. In addition, all documents, patent applications, and technical standards described in the present specification are herein incorporated by reference to the same extent that each individual document, patent application, or technical standard was specifically and individually indicated to be incorporated by reference.

**Claims**

1. An image recording method comprising:

   a step of jetting ink containing water and a colorant onto a substrate as at least two types of liquid droplets having liquid droplet sizes different from each other by a single-pass method using an ink jet recording method,
   wherein, in a case where two types of liquid droplets of the at least two types of liquid droplets are defined as a first liquid droplet and a second liquid droplet,
   a size of the first liquid droplet is defined as $V_1$ in units of pL,
   a size of the second liquid droplet is defined as $V_2$ in units of pL,

**EP 4 663 413 A1**

a ratio of a number of times of jetting of the first liquid droplet to a total number of times of jetting of the first liquid droplet and the second liquid droplet is defined as $a_1$,

a ratio of a number of times of jetting of the second liquid droplet to the total number of times of jetting of the first liquid droplet and the second liquid droplet is defined as $a_2$, and

a contact angle of the ink with respect to a contact surface with which the ink comes into contact by the jetting of the ink is defined as $\theta°$,

the $V_1$, the $V_2$, the $a_1$, the $a_2$, and the $\theta$ satisfy Expression (1) and Expression (2),

$$0.45 \leq V_2/V_1 \leq 0.9 \ldots (1),$$

$$3.5 \leq \{V_1^{1/3} \times (1 + \cos\theta)\}^2 \times a_1 + \{V_2^{1/3} \times (1 + \cos\theta)\}^2 \times a_2 \leq 7.0 \ldots (2),$$

where, the contact angle is measured, after applying the ink to the contact surface, at a point in time when 300 milliseconds have elapsed from a point in time when the ink is applied to the contact surface.

2. The image recording method according to claim 1,
wherein the $V_1$ and the $V_2$ satisfy Expression (1A),

$$0.5 \leq V_2/V_1 \leq 0.8 \ldots (1A).$$

3. The image recording method according to claim 1 or 2,
wherein the $V_1$, the $V_2$, the $a_1$, the $a_2$, and the $\theta$ satisfy Expression (2A),

$$4.5 \leq \{V_1^{1/3} \times (1 + \cos\theta)\}^2 \times a_1 + \{V_2^{1/3} \times (1 + \cos\theta)\}^2 \times a_2 \leq 6.2 \ldots (2A).$$

4. The image recording method according to claim 1 or 2,
wherein the $V_1$, the $V_2$, the $a_1$, the $a_2$, and the $\theta$ satisfy Expression (3),

$$[\{V_1^{1/3} \times (1 + \cos\theta)\}^2 - \{V_2^{1/3} \times (1 + \cos\theta)\}^2] \times a_1 \leq 4.8 \ldots (3).$$

5. The image recording method according to claim 1 or 2,
wherein the substrate is a non-permeable substrate.

6. The image recording method according to claim 1 or 2,
wherein the colorant is a white coloring material.

7. The image recording method according to claim 6,
wherein the white coloring material includes at least one selected from the group consisting of titanium dioxide and hollow particles.

8. The image recording method according to claim 1 or 2, further comprising:

a step of applying a pretreatment liquid containing a coagulating agent onto the substrate,
wherein, in the step of jetting the ink, the ink is jetted onto the substrate onto which the pretreatment liquid has been applied.

# FIG. 1

## INTERNATIONAL SEARCH REPORT

| International application No. |
|---|
| **PCT/JP2023/046235** |

### A. CLASSIFICATION OF SUBJECT MATTER

**B41J 2/01**(2006.01)i; **B41J 2/21**(2006.01)i; **B41M 5/00**(2006.01)i; **C09D 11/30**(2014.01)i
FI: B41J2/01 209; B41J2/01 123; B41J2/01 501; B41J2/21; B41M5/00 100; B41M5/00 120; B41M5/00 132; C09D11/30

According to International Patent Classification (IPC) or to both national classification and IPC

### B. FIELDS SEARCHED

Minimum documentation searched (classification system followed by classification symbols)

B41J2/01-2/215; B41M5/00; C09D11/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2008-213427 A (RICOH COMPANY, LTD.) 18 September 2008 (2008-09-18) paragraphs [0088]-[0118], [0206]-[0208], [0339]-[0358] | 1-8 |
| A | WO 2020/021884 A1 (FUJIFILM CORPORATION) 30 January 2020 (2020-01-30) entire text, all drawings | 1-8 |
| A | US 2020/0238724 A1 (FFEI LIMITED) 30 July 2020 (2020-07-30) entire text, all drawings | 1-8 |
| A | US 6312099 B1 (EASTMAN KODAK CO.) 06 November 2001 (2001-11-06) entire text, all drawings | 1-8 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 January 2024** | **30 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

| International application No. |
| --- |
| **PCT/JP2023/046235** |

| Patent document cited in search report | | | Publication date (day/month/year) | Patent family member(s) | | | Publication date (day/month/year) |
| --- | --- | --- | --- | --- | --- | --- | --- |
| JP | 2008-213427 | A | 18 September 2008 | (Family: none) | | | |
| WO | 2020/021884 | A1 | 30 January 2020 | US | 2021/0094325 | A1 | |
| | | | | entire text, all drawings | | | |
| | | | | EP | 3827999 | A1 | |
| | | | | CN | 112423992 | A | |
| US | 2020/0238724 | A1 | 30 July 2020 | GB | 2565115 | A | |
| | | | | entire text, all drawings | | | |
| | | | | WO | 2019/025794 | A1 | |
| | | | | DE | 112018003937 | T | |
| US | 6312099 | B1 | 06 November 2001 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010075786 A
- JP 2009233612 A
- JP 2016112892 A
- JP 2002012607 A
- JP 2002188025 A
- JP 2003026978 A
- JP 2003342503 A
- WO 2021221069 A

- JP 2015025076 A
- WO 2021192720 A
- JP 54059936 A
- JP S5459936 A
- JP 2003306623 A
- WO 2020195360 A
- JP 2023019432 A

**Non-patent literature cited in the description**

- Encyclopedia of Pigments. 2000
- **W. HERBST** ; **K. HUNGER**. Industrial Organic Pigments